# EUROPÄISCHE PATENTSCHRIFT

(11) **EP 3 601 517 B1**
(45) Veröffentlichungstag und Bekanntmachung des Hinweises auf die Patenterteilung: **01.01.2025**
(21) Anmeldenummer: 18713858.1
(22) Anmeldetag: 22.03.2018
(51) Int. Cl.: C12C 3/06, C12C 7/28, C12C 11/11, C12C 5/02

(54) **VERFAHREN ZUR DOSIERUNG VON HOPFENPELLETS IN EIN VERGORENES BIERVORPRODUKT UND ANLAGE ZUR AUSFÜHRUNG DES VERFAHRENS**
METHOD FOR METERING HOPS PELLETS INTO A FERMENTED BEER PRECURSOR, AND SYSTEM FOR CARRYING OUT THE METHOD
PROCÉDÉ POUR LE DOSAGE DE PELLETS DE HOUBLON DANS UN PRÉCURSEUR DE BIÈRE FERMENTÉ ET INSTALLATION DESTINÉE À LA MISE EN OEUVRE DU PROCÉDÉ

(30) Priorität: 27.03.2017 DE 102017106549
(43) Veröffentlichungstag der Anmeldung: 05.02.2020
(73) Patentinhaber: GEA Mechanical Equipment GmbH, 59302 Oelde (DE)
(72) Erfinder: VEER, Thomas, 49832 Beesten (DE); BUSSMANN, Daniel, 59302 Oelde (DE); HERBERG, Wolf-Dietrich, 58456 Witten (DE); WAUBKE, Carsten, 59302 Oelde (DE)
(74) Vertreter: Specht, Peter
(86) Internationale Anmeldenummer: PCT/EP2018/057299
(87) Internationale Veröffentlichungsnummer: WO 2018/177882

(56) Entgegenhaltungen:
- EP-A1- 3 023 485
- DE-A1- 102010 010 278
- DE-A1- 102013 101 435
- DE-A1- 2 225 375
- US-A1- 2013 202 736

## Beschreibung

Die vorliegende Erfindung betrifft ein Verfahren zur Dosierung von Hopfenpellets in ein vergorenes Biervorprodukt, beispielsweise ein Jungbier, und eine Anlage zur Ausführung des Verfahrens.

Aktuell sind verschiedene Möglichkeiten der sogenannten Kalthopfung bekannt, wobei sich ein Großteil der Herstellungsverfahren darauf beschränkt, den Hopfen vor dem Befüllen eines Kaltlagertanks mit einem Biervorprodukt manuell in den Kaltlagertank zu geben.

Alternativprozesse, wie sie u.a. in der US 8,875,616 B2 bekannt sind, beschreiben eine Extraktion von Hopfenpellets in einem gesonderten Behälter, wodurch ein Hopfenextrakt gewonnen wird, welches dem Bier dann wieder zugeführt werden muss. Der Hopfen wird hier also nur in einem Teilstrom des Bieres gelöst. Zusätzlich wird hier oftmals die Vermahlung der Hopfenpellets vorgesehen um die Extraktion der Aromabestandteile zu erhöhen.

Der Prozess der sogenannten Trockenhopfung wird u.a. in der DE 10 2015 121 999 A1, der DE 2 228 497 A und der GB 2 531 054 A beschrieben. Bei den meisten dieser Prozesse erfolgt die Hopfung allerdings zu einem vergleichsweise frühen Stadium der Bierherstellung, welche meist gefolgt ist von einer temperaturintensiven Vergärung.

Am prägnantesten wird dieser Prozess in der GB 2 531 054 A beschrieben, in welchem die Hopfenzugabe während der Hopfung und im Anschluss daran auf Temperaturen über 80°C erhitzt wird.

Die DE 2 225 375 A1 lehrt ein Verfahren zum Zuführen von Hopfengranulat zu einer Sudpfanne und eine Vorrichtung hierzu. Dabei wird das Granulat mittels einer Zellradschleuse portioniert und zerkleinert. Das zerkleinerte Granulat wird sodann mittels Wasser oder Würze in die Sudpfanne befördert.

Die DE 10 2013 101 435 A1 offenbart eine Vorrichtung zur Extraktion von Aromastoffen in Bier. Hierzu wird eine Vorrichtung aus einer Abfolge mehrerer Prozessbehälter offenbart.

Ausgehend vom vorgenannten Stand der Technik ist es die Aufgabe der vorliegenden Erfindung ein Verfahren bereitzustellen, welches eine aromastoffschonende Dosierung von lupulinhaltigen Hopfenpellets in ein Biervorprodukt ermöglicht.

Die vorliegende Erfindung löst diese Aufgabe durch das Bereitstellen eines Verfahrens mit den Merkmalen des Anspruchs 1 und durch eine Anlage mit den Merkmalen des Anspruchs 19.

Das erfindungsgemäße Verfahren betrifft die Dosierung von Hopfenpellets in ein vergorenes Biervorprodukt. Dies ist ein Schritt bei der Herstellung von Bier, beispielsweise im Rahmen einer Kalthopfung.

Das erfindungsgemäße Verfahren wird mit einer Anlage durchgeführt, welche ein Dosiersystem und eine Pumpe umfasst. Es weist folgende Schritte auf.
I. Zuführen von Hopfenpellets in die Anlage;
II. Dosieren einer vorbestimmten Menge an Hopfenpellets vom Dosiersystem zur Pumpe;
III. Zuleiten der vorbestimmten Menge an Hopfenpellets in eine biervorprodukt-führende Leitung oder einen mit Biervorprodukt befüllten Tank durch die Pumpe.

Das erfindungsgemäße Verfahren kann optional ergänzt werden durch den folgenden Schritt:
IV. Klären des mit pelletiertem und/oder granulierten Hopfen versehenen Bieres durch Mittel der mechanischen Trenntechnik, insbesondere durch eine Filtrationsvorrichtung und/oder eine Zentrifuge,

Zwischen dem Schritt III und dem Schritt IV kann das Bier zudem gelagert werden und/oder reifen.

Das Zuleiten der dosierten Hopfenpellets in die biervorprodukt-führende Leitung oder in den mit dem Biervorprodukt befüllten Tank erfolgt in pelletierter und/oder granulierter Form.

Durch das scherkraftarme stückige Zuführen des granulierten und/oder pelletierten Feststoffes in das Biervorprodukt, insbesondere ohne vorherige Extraktbildung, werden Inhaltstoffe, z.B. Lupulinkörnchen unzerstört in die Flüssigkeit überführt.

Beim Zuleiten in eine biervorprodukt-führende Leitung kann besonders vorteilhaft eine gleichmäßige und schnelle Verteilung der Hopfenpellets und deren Inhaltsstoffe im Biervorprodukt erreicht werden.

Dabei kann die Fließrate des Biervorproduktes, insbesondere der Zeitraum des Pumpbetriebs, in der Leitung auf die Dosierung abgestimmt werden. Die minimale Zeit zum Betrieb der Pumpe t_{Pump} sollte dabei vorzugsweise größer sein als die Zeit t_{Dos.}, welche zur Dosierung, benötigt wird.

Besonders bevorzugt gilt: t_{Dos.} ≤ 0, 95 t_{Pump}

Die Zugabe von Hopfenpellets in einen mit Biervorprodukt befüllten Tank ist ebenfalls möglich. "Befüllt" kann besonders bevorzugt auch bedeuten, dass der Tank teilbefüllt, also nicht vollständig befüllt, ist.

Es empfiehlt sich den Tank vorzugsweise mit einer oder mehreren Rührvorrichtungen zu versehen, so dass eine bessere Verteilung der zudosierten Hopfenpellets oder Hopfengranulate erfolgen kann.

Das vergorene Biervorprodukt kann insbesondere Jungbier sein. Ein Biervorprodukt ist noch nicht als fertiges Bier zu verstehen, sondern als ein Zwischenprodukt bei der Bierproduktion.

Das erfindungsgemäße Verfahren kann somit weitere Schritte aufweisen, wobei allerdings die Temperatur vor einer Hopfenabtrennung aus dem Biervorprodukt, und besonders bevorzugt auch nicht während aller weiteren Brauschritte, zu keinem Zeitpunkt eine Temperatur von 60°C, vorzugsweise von 30°C überschreitet.

Weitere vorteilhafte Ausgestaltungen der Erfindung sind Gegenstand der Unteransprüche.

Es ist von Vorteil, wenn zumindest 30 Gew.%, vorzugsweise zumindest 50 Gew.%, besonders bevorzugt zumindest 80 Gew.% der in die Anlage eingeleiteten Hopfenpellets beim Zuleiten der dosierten Hopfenpellets in die Flüssigkeit in pelletierter und/oder granulierter Form mit einer mittleren Korngröße mit einem Äquivalenzdurchmesser von zumindest 1 mm vorliegen. Mehr 50%, vorzugsweise mehr als 80%, insbesondere mehr als 90% der dosierten Hopfen-Feststoffe in granulierter und/oder pelletierter weisen dabei den Äquivalenzdurchmesser von zumindest 1 mm aufweisen. Feststoffe in Form von granulierten und/oder pelletierten Hopfenpellets können oberhalb dieses Äquivalenzdurchmessers in unterschiedlichen Korngrößen vorliegen.

Somit ist es möglich, dass die Hopfenpellets in der Anlage grob zerkleinert werden. Durch diese Grobzerkleinerung bildet sich jedoch kein Pulver aus sondern ein granulierter Feststoff mit entsprechender Korngröße.

Die Hopfenpellets können trocken oder besonders bevorzugt in einer Flüssigkeit in die biervorprodukt-führende Leitung oder in den mit dem Biervorprodukt befüllten Tank zugeleitet werden.

Das Klären in Schritt IV kann bevorzugt durch Filtration oder ebenfalls bevorzugt durch zentrifugales Klären erfolgen.

Zwischen der Zugabe der dosierten Hopfenpellets und der Klärung kann eine Reifung und Lagerung erfolgen.

Die pelletierte und/oder granulierte Form der Hopfenpellets kann dabei erhalten bleiben, so dass die Flüssigkeit dazu dient den Transport der Hopfenpellets in der Anlage erleichtert.

Die Temperatur des Biervorproduktes in der biervorprodukt-führenden Leitung oder in dem mit dem Biervorprodukt befüllten Tank sollte weniger als 60°C, bevorzugt weniger als 30 °C, betragen. Dadurch werden die Hopfeninhaltsstoffe sehr schonend zugeführt und verarbeitet. Hierfür kann ein Temperatursensor in der biervorproduktführenden Leitung oder im Tank vorgesehen sein. Über eine Steuer- und/oder Auswerteeinheit kann das Messsignal des Temperatursensors über einen Istwert-/ Sollwertvergleich abgeglichen werden. Ist die Temperatur des Biervorproduktes zu hoch so kann die Dosierung der Hopfenpellets gestoppt werden. Das Biervorprodukt kann über einen Kühlkreislauf abgekühlt und der Anlage erneut zugeführt werden. Durch die temperaturkontrollierte Zudosierung kann ggf. auch das Auftreten von unerwünschten geschmacklichen Veränderungen verhindert werden.

Die Anlage kann vorteilhaft einen ersten Behälter aufweisen, welcher in Transportrichtung der Hopfenpellets vor dem Dosiersystem angeordnet ist.

Die Anlage kann zudem einen zweiten Behälter aufweisen, welcher zwischen dem Dosiersystem und der Pumpe angeordnet ist.

Die Behälter ermöglichen eine optimiertere Zugabe, insbesondere gleichmäßigere Zugabe, von Hopfenpellets.

Die Dosiergeschwindigkeit kann vorteilhaft durch die Regelung der Pumpe bestimmt werden.

Das Verfahren wird vorteilhaft zu einem sehr späten Zeitpunkt des Brauprozesses angewandt, nämlich nach der Hauptgärung. Somit handelt es sich bei dem Bierprodukt welches gehopft werden soll um ein bereits vergorenes Biervorprodukt. Dieser späte Zeitpunkt ist relativ ungewöhnlich, es wurde allerdings festgestellt, dass sich besondere geschmackliche Effekte durch die Hopfung zu diesem späten Zeitpunkt erzielen lassen. Eine eventuelle Nachgärung während der anschließenden Reifung bei einer Temperatur von unter 60C° beeinflusst diesen Effekt nicht.

Während des Verfahrens kann ein Inertgas in das Dosiersystem, in den ersten und/oder in den zweiten Behälter eingeleitet werden. Ein unerwünschter Kontakt bestimmter Gase mit den Hopfenpellets, z.B. mit Sauerstoff, wird dabei vorteilhaft vermieden.

Besonders bevorzugt kann zumindest das Dosiersystem oder der zweite Behälter mit Inertgas überlagert und somit vorzugsweise druckbeaufschlagt werden.

Im Anschluss an das Zuleiten der dosierten Hopfenpellets kann eine Reinigung der Anlage erfolgen, wobei die Reinigung mit flüssigem oder dampfförmigem Reinigungsfluid durchgeführt werden kann. Besonders bevorzugt ist dabei eine sogenannte CIP-Reinigung.

Die Reinigung kann ein Zuleiten von Trockenluft nach erfolgter Reinigung mit flüssigen oder dampfförmigen Reinigungsfluid umfassen. Dadurch erfolgt eine Trocknung der Anlage.

Das Dosieren der Hopfenpellets kann durch das Dosiersystem zumindest durch ein Zellrad erfolgen. Der Bestandteil der Anlage welcher das Zellrad umfasst wird Zellradschleuse genannt. Die Drehgeschwindigkeit des Zellrads kann ebenfalls über die vorgenannte Steuer und/oder Auswerteeinheit in Abhängigkeit von der Rührgeschwindigkeit eines Rührwerks im Tank oder in Abhängigkeit vom Durchfluss des Biervorproduktes in der Leitung gesteuert werden.

Die genaue Menge/Zeit-Dosierung der Hopfenpellets erfolgt durch eine Regelung der Zellraddrehzahl.

Die biervorprodukt-führende Leitung kann einen Zulaufregler und ein Durchflussmessgerät aufweisen, zur Überwachung und Einstellung des Durchflusses des Biervorproduktes in der biervorproduktführenden Leitung. Gleiches ist auch in der Variante mit dem Tank und dem darin befüllten Biervorprodukt realisierbar, wobei allerdings hier die Rührgeschwindigkeit des Rührwerks im Tank überwacht wird.

Die Bestimmung der Menge an Hopfenpellets kann zudem im Falle eines Tanks anstelle einer Leitung anhand eines Füllstands des Biervorproduktes im Tank erfolgen.

Die Pumpe kann für eine Schonförderung ausgelegt sein, wobei ein Rotor und ein Stator der Pumpe derart angeordnet sind, dass die granulierte und/oder pelletierte Form der Hopfenpellets zumindest bei 90 Gew.% aller Hopfenpellets erhalten bleibt.

Der Füllstand des ersten und/oder des zweiten Behälters wird durch eine Füllstandsmessung und/oder -überwachung, z.B. durch Füllstandsgrenzschalter überwacht, was eine Funktionsüberwachung der Zellradschleuse ermöglicht.

Zusätzlich zur dosierten Zugabe von Hopfenpellets können auch Holzstücke in das Biervorprodukt zugeführt werden. Hierfür kann auch das Zellrad für eine dosierte Zugabe genutzt werden. Die Holzstücke geben dem Bier einen besonderen Lagergeschmack z.B. nach Eichenfässern. Die Zugabe von Holzstücke muss allerdings nicht bei jeder Biersorte erfolgen.

Die Hopfenpellets können vorteilhaft im Vergleich zu natürlichen Hopfendolden mit gleichem Gewicht einen höheren Lupulingehalt aufweisen. Besonders der alpha-Lupulingehalt kann vorteilhaft erhöht sein. Diese Aromastoffe sind besonders wichtig für die Geschmackseigenschaften des Bieres. Ein erhöhter Anteil dieser Aromastoffe bei gleichzeitig verringertem Volumen erleichtert die Zugabe bei der Feststoffdosierung und ermöglicht auch einen besseren Transport des Hopfens und einen geringeren Lageraufwand.

Ebenfalls erfindungsgemäß ist eine Anlage zum Ausführen eines erfindungsgemäßen Verfahrens wobei die Anlage
a) einen ersten Behälter
b) ein Dosiersystem zur Dosierung der Feststoffe
c) einen zweiten Behälter und
d) eine Pumpe aufweist, welche an eine flüssigkeitsführende Leitung, insbesondere eine Biervorprodukt-führende Leitung, angeschlossen ist.

Besonders von Vorteil bei der Verfahrensführung ist das Nichtzerschlagen von pelletierten und/oder granulierten Feststoffen.

Auch bei Zugabe von Flüssigkeit zur Unterstützung der Transportfähigkeit des Feststoffes kommt es nicht zur Auflösung des Feststoffes und zur Extraktbildung sondern der Feststoff verbleibt weitgehend in einer granulierten und/oder pelletierten Form.

Die Pumpe kann bevorzugt als Verdrängerpumpe ausgebildet sein mit zwei Zuläufen, wobei ein Zulauf zur Zuführung von Hopfenpellets und ein Zulauf zur Zuführung von Biervorprodukt ausgebildet ist, und ein Ablauf zur Abführung eines Produktes aus den Hopfenpellets und dem Biervorprodukt ausgebildet ist.

Nachfolgend wird die Erfindung anhand eines konkreten Ausführungsbeispiels und unter Zuhilfenahme der beiliegenden Figuren näher erläutert. Es zeigt:
Fig. 1 schematische Darstellung eines Ablaufs zur Herstellung von Bier; und
Fig. 2 schematische Darstellung einer Anordnung einer Kalthopfung von Bier.

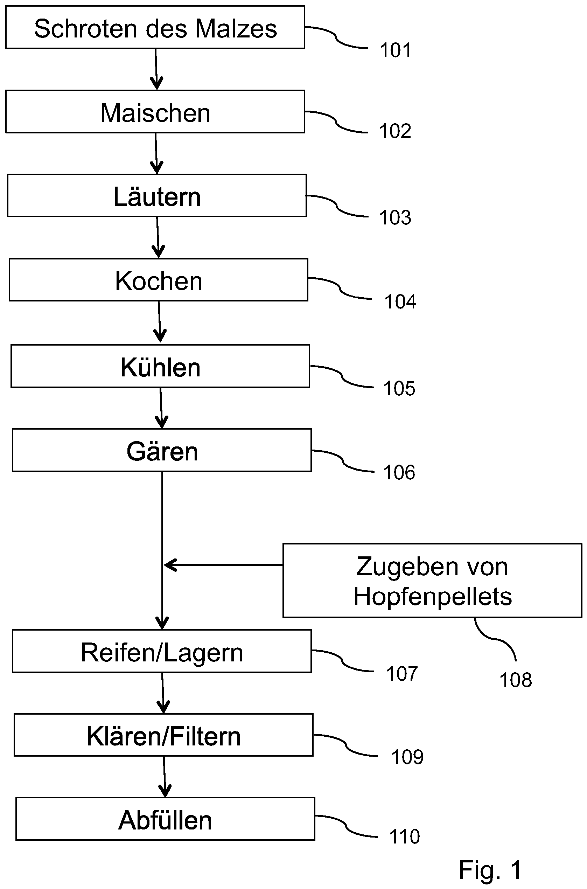

Fig. 1 zeigt eine Bierherstellung, wobei zusätzliche optionale Schritte noch vorgesehen sein können. Ein erster Schritt des in Fig. 1 dargestellten Verfahrens umfasst das Schroten des Malzes 101.

Sodann erfolgt das Maischen 102. Dabei erfolgt ein Aufschluss des Schrotes zur weiteren Verarbeitung.

Auf das Maischen 102 erfolgt das Läutern 103 des Gemisches. Dabei erfolgt die Trennung von Maische und Bierwürze.

Der darauffolgende Schritt ist das Kochen 104, auch Würzekochen genannt. Dabei werden u.a. Malzenzyme denaturiert. Oftmals wird Hopfen bereits bei diesem Schritt zugegeben.

Im Anschluss erfolgt ein Kühlen 105 des Gemisches.

Sodann wird durch Hefezugabe eine Gärung 106 initiiert in welcher Würze in Alkohol und Kohlendioxid umgewandelt wird. Das entstandene Gemisch wird oftmals auch Jungbier genannt.

Nach der Gärung 106 erfolgt eine Lagerung und/oder Reifung 107 des Jungbieres. Zuvor erfolgt die erfindungsgemäße Zugabe der Hopfenpellets 108 zu einem vergleichsweise späten Prozess der Bierherstellung.

Nach der Lagerung und/oder Reifung 107 erfolgt eine Filtration 109 des Bieres zur Entfernung von Eiweißgerbstoffen, Hopfenkomponenten, z.B. Hopfenharzstoffen, und anderen Jungbier-Bestandteilen.

Schließlich erfolgt das Abfüllen 110 des hergestellten Bieres.

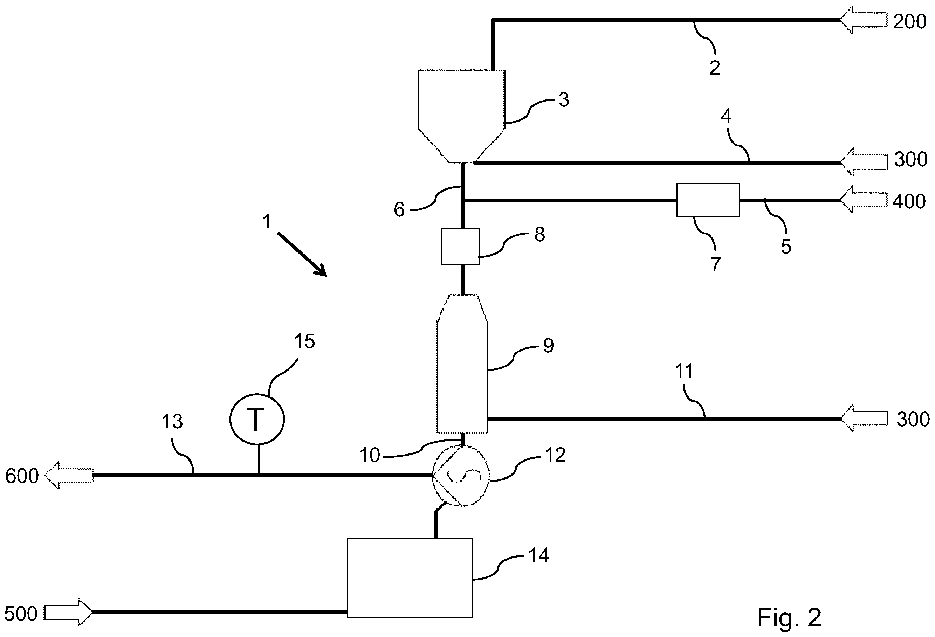

Die Zugabe der Hopfenpellets in Schritt 108 kann in einer Anlage 1, wie sie in Fig. 2 dargestellt ist, erfolgen.

Die Anlage 1 der Fig. 2 weist eine Zuleitung 2 für Hopfenpellets 200 auf.

Die Hopfenpellets 200 werden in einen ersten Behälter 3 eingeführt. Der erste Behälter 3 oder eine am ersten Behälter 3 angeordnete Stoffüberleitung 6 weist eine erste Zuleitung und/oder eine Ableitung 4 für ein Inertgas 300 auf. Weiterhin weist der erste Behälter 3, die am Behälter angeordnete Stoffüberleitung 6 und/oder die Zuleitung 4 für ein Inertgas 300 und/oder eine Zuleitung 5 für Trockenluft 400 auf. Der Behälter 3 kann auch als ein Pufferbehälter verstanden werden. Dieser ermöglicht aufgrund der Feststoffsäule einen kontinuierlichen Zulauf an Feststoff zu einer nachgelagerten Feststoffdosieranlage.

Die Stoffüberleitung 6 dient der Überleitung von Hopfenpellets und kann auch unabhängig von den Zuleitungen 4 und 5 ausgebildet sein.

An oder in der Zuleitung 5 für Trockenluft kann Trocknungseinheit 7 für eingeleitete Luft aufweisen, um Restfeuchte zu entfernen.

Die Stoffüberleitung 6 mündet in der Dosiersystem 8. Dies kann beispielsweise mit einem sogenannten Zellrad ausgebildet sein. Alternativ oder zusätzlich zu einer solchen Zellradschleuse kann ein System aus alternierend angesteuerten Ventilen oder Schiebern zur Feststoffdosierung vorgesehen sein.

Die Dosiersystem 8 dosiert Hopfenpellets in granulierter und/oder pelletierter Form in einen Behälter 9. Der Behälter 9 oder eine am Behälter mündende Stoffüberleitung 10 weist bei Bedarf eine zweite Zuleitung 11 für Inertgas 300 auf.

Die Stoffüberleitung 10 mündet in einer Pumpe 12, welche als Verdrängerpumpe ausgebildet sein kann. Die Pumpe 12 ist entlang einer Bierleitung 13 angeordnet, wobei der Abschnitt 13a dieser Leitung das Biervorprodukt der Pumpe 12 zuführt und der Leitungsabschnitt 13b mit der Druckseite der Pumpe verbunden ist und das nun mit dem zudosierten Hopfen versehene Bier ableitet. Ein Zulaufregler in der Steuerung sorgt dabei für die richtige Mengendosierung der Hopfenpellets 200 in das Biervorprodukt. Hierzu wird beispielsweise in einer Durchflussmessung 14 die Jungbiermenge (Volumen/Zeit) ermittelt, welche dann als Führungsgröße für die Drehzahlregelungen der Pumpe 12 und der Zellradschleuse 8 dient. Alternativ zu dieser mengenproportionalen Dosage kann auch eine zeitproportionale Dosage erfolgen.

Die bierproduktführende Leitung weist zudem einen Temperatursensor 15 auf, welcher die Temperatur des Biervorproduktes überwacht. Ist diese zu hoch, so erfolgt keine Hopfung. Es kann allerdings eine Abkühlung des Biervorproduktes initiiert werden. Nicht dargestellt, allerdings leicht vorstellbar kann zur Steuerung der einzelnen Verfahrensschritte und zur Prozessüberwachung eine Steuer- und Auswerteeinrichtung genutzt werden.

Die Pumpe 12 ist bevorzugt als Verdrängerpumpe ausgebildet. Sie dient zugleich der Zuführung von Hopfen auf der Saugseite als auch der Zuführung des Biervorproduktes zwischen Saugseite und Druckseite der Pumpe. Das Produkt wird als gehopftes Bier auf der Druckseite aus der Pumpe abgeführt. Typischerweise umfasst eine Verdrängerpumpe einen Läufer und einen Stator. Sowohl der Läufer als auch der Stator sind in der vorliegenden Pumpe scherarm ausgebildet. Die Pumpe umfasst somit zwei Zuläufe, vorzugsweise einen Feststoffzulauf und einen Flüssigzulauf, und einen Ablauf, vorzugsweise einen Flüssigablauf. Einer der beiden Zuläufe kann vorzugsweise zwischen der Saug- und der Druckseite der Pumpe 12 angeordnet sein.

Die zugeführten Hopfenpellets behalten bei der Dosierung und Zuleitung ihre pelletierte Form weitgehend bei, so dass Lupulinkörner nicht während der Dosierung zerstört werden.

Die Zugabe von Hopfenpellets zu Bier kann mit einer bevorzugten Größe von 1 mm bis 20 mm erfolgen. Diese Hopfenpelletzugabe zu Bier stellt einen kritischen Punkt innerhalb des Brauprozesses dar, da hier die Gefahr einer Kontaminierung des Lebensmittels, einer CO₂-Entgasung und/oder eines Sauerstoffeintrages besteht.

Mit der hier aufgezeigten Erfindung können Aromaträger aus den Hopfenpellets automatisch, ohne Sauerstoffeintrag, ohne CO₂-Austrag und/oder hygienisch in einen Volumenstrom eingebracht werden.

Der Behälter 3 kann manuell oder automatisch beschickt werden oder kann eine vorbestimmte Menge einer Produktcharge aufnehmen. Sodann kann der Behälter verschlossen werden und durch ein Gas, insbesondere das Inertgas druckbeaufschlagt und somit vorgespannt werden, damit kein Sauerstoff aufgenommen wird oder Kohlendioxid aus dem Jungbier verloren geht.

Vorzugsweise weist der zweite Behälter 9 einen Auslaufflansch auf, welcher mit einem Einlauf der Pumpe 12 verflanscht ist, so dass der Hopfenfeststoff frei in den Einlauf der Pumpe 12 einfallen kann.

Die Pumpe kann vorzugsweise als eine Verdrängerpumpe und besonders bevorzugt als eine Exzenterschneckenpumpe oder Doppelschraubenspiralpumpe ausgebildet sein.

Der Behälter 9 kann ggf. mit einem Inertgas vorgespannt werden, um den Sauerstoffgehalt in der Anlage zu verringern oder gänzlich auszuschließen und um den CO₂ -Gehalt des Bieres aufrecht zu erhalten. Die Druckseite der Pumpe 12 ist mit der Produktleitung der Flüssigkeit, beispielsweise der Bierleitung 13b, verbunden. Die Behälter 3 und/oder 9 können mit Sonden zur Niveaumessung ausgerüstet sein, z.B. über mittels Ultraschall, Leitfähigkeit, Kapazität oder Radar kann die Füllhöhe bestimmt werden.

Die Anlage 1, insbesondere die Behälter 3 und 9, kann durch Einleiten eines Reinigungsfluids, z.B. Wasser, gereinigt werden. Dies kann auch durch Wasserdampf erfolgen. Die Reinigung kann im Rahmen einer CIP-Reinigung erfolgen. Dabei sollte die Anlage vorteilhaft nach der Reinigung durch Trockenluft getrocknet werden. Hierfür ist die Trocknungseinheit vorgesehen, welche gefilterte Außenluft ansaugt und trocknet.

Die Dosage des Feststoffs in den Behälter 9 erfolgt über das Dosiersystem 8, deren Funktion über die Niveaumessungen überwacht werden kann.

So kann bevorzugt ermittelt werden ob Hopfenpellets in den Behälter 9 gefördert werden. Wird trotz der Förderung durch das Zellrad kein Niveauzuwachs detektiert, so kann beispielsweise eine Verstopfung des Zellrades als Fehlermeldung ausgegeben werden.

Somit kann die Dosage anhand des Füllstandes überwacht werden
Die Dosage aus Behälter 9 in den Produktstrom kann derart erfolgen, dass die Pumpe 12 den trocknen Feststoff annimmt und ihn in die Bierleitung 13b fördert. Zur Verhinderung von Verschleiß wird dem Pumpeneinlauf, im Falle einer Exzenterschneckenpumpe dem Statoreinlauf, ein kleiner Produktstrom zugeführt.

Die Dosage kann auch mit angefeuchtetem Feststoff erfolgen. Dieser bewahrt jedoch seine granulierte bzw. pelletierte Form.

Bevorzugt ist die Verwendung der in Fig. 2 dargestellten Anlage 1 für die sogenannte Kalthopfung, also die Hopfenzugabe in bereits vergorenes Biervorprodukt, dem sogenannten Jungbier 500. Durch die Zudosierung von granulierten oder pelletierten Hopfen verbleiben die im Hopfen enthaltenen Aromen im gehopften Bier 600 und geben dem Bier so ein spezielles Aroma.

Die Kalthopfung erfolgt vorzugsweise bei Temperaturen von weniger als 60°C, vorzugsweise weniger als 30°C. Anders als bei der Warmhopfung z.B. in Kupferkessel bei Siedetemperatur entstehen bei der Kalthopfung weniger Bitterstoffe oder andere Nebenprodukte.

Als Jungbier 500 besonders geeignet ist ein vorgeklärtes Bier, dem Hopfenpellets, ggf. in teilzerkleinerter Form, zur Würzung in Granulat- und/oder Pelletform, also auf schonende Weise zugesetzt wurde. Dieser dem Bier zudosierte stückige Hopfen sollte nach dem Zusatz und nach einer gewissen Einwirkungszeit wieder als Feststoff, vorzugsweise durch Klärung z.B. mit Hilfe einer Zentrifuge bzw. eines Separators aus dem Bieres entfernt werden.

Alternativ zur Zentrifuge kann auch eine Filtrationsvorrichtung zur Klärung des Bieres bzw. zur Entfernung der zudosierten Hopfen-Feststoffe eingesetzt werden. Alternativ kann auch eine Abtrennung durch natürliche Sedimentation erfolgen.

Somit kann das Gemisch aus Bier und Hopfenbestandteilen vorteilhaft geklärt werden.

Die Zuführung des Hopfens 200 ausgehend von der Zuleitung 2 in die Bierleitung 13 erfolgt ohne Mahl- oder Feststoffzerkleinerungsvorrichtung. Dadurch wird ein zerstörungsfreies Zudosieren des Hopfens in das Bier in pelletierter oder granulierter Form erreicht, wodurch eine Schädigung von Aromaträgern verhindert wird.

Bei dem Kalthopfungsprozess sind diese Aromaträger beispielsweise die Lupulinkörnchen, welche die Aromastoffe sowie Bitterstoffe des Hopfens enthalten und insbesondere bei Hopfenpellets aufkonzentriert zu finden sind.

Die Anlage 1 dient insbesondere zur Dosage von Feststoffen in Flüssigkeiten, wobei die Struktur der Feststoffe während der Dosage erhalten bleiben soll. Es soll keine Vermahlung/Scherung der Feststoffe auftreten so dass die Auflösung oder Auslaugung dieser Feststoffe erst in der suspendierenden Flüssigkeit, z.B. in Bier, erfolgt.

Es ist auch möglich zu einem besseren Abtransport der granulierten und/oder pelletierten Feststoffe aus dem Behälter 9 eine Flüssigkeit, insbesondere die gleiche Flüssigkeit in welche der Feststoff zudosiert werden soll, zuzugeben wird. Als Beispiel wird die Vorrichtung hier im Rahmen der Dosage von Hopfenpellets in Bier beschrieben. Dabei kann zum granulierten und/oder pelletierten Hopfen eine Menge Bier, meist eine vergleichsweise geringe Menge Bier zugegeben werden, wodurch ein besserer Stoffabtransport aus dem Behälter 9 in die Pumpe 12 erfolgt. Alternativ können auch nur ein Rest an Feststoffen durch Nachspülen abtransportiert werden.

Die pelletierte und/oder granulierte Form bleibt auch bei Bierzugabe für ca. 1 Minuten, besser ca. 2 Minuten, noch besser ca. 5 Minuten zum Zweck der Überleitung im Wesentlichen erhalten.

Unter granulierten Grundstoffen versteht man zu kleinen Kügelchen gepressten oder gemahlenen Grundstoff. Als Pellets kann ein länglich-zylindrisch gepresster Grundstoff verstanden werden. Dabei ist ein Granulat meist ein rieselfähiger Feststoff. Pellets sind demgegenüber meist größer als Granulate.

Die Klärung/Filtration gemäß Schritt 109 kann in einem Verfahren zur Klärung eines fließfähigen Produktes erfolgen, ähnlich wie es in der DE 10 2013 111 579 A1 beschrieben wird. Auf dieses Verfahren wird zur vorteilhaften Klärung von Bier und anderen Flüssigkeiten mit Feststoffen vollumfänglich Bezug genommen. Diese Klärung kann sich vorteilhaft an das erfindungsgemäße Verfahren zur Dosierung von Feststoffen anschließen oder in das erfindungsgemäße Verfahren als zusätzlicher Verfahrensschritt nach der Zuleitung des Feststoffes in die Flüssigkeit integriert sein.

Besonders bevorzugt ist die Zugabe eines mit Lupulin angereicherten Hopfengranulats oder von mit Lupulin angereicherten Hopfenpellets.

Bei dem Anreicherungsverfahren wurden die Blattfraktion und die Doldenspindel entfernt, so dass eine Anreicherung an Lupulin vorliegt.

Diese können durch eine mehrstufige Bearbeitung aus Hopfendolden gewonnen werden. Eine bevorzugte Herstellung von Hopfenpellets umfasst zumindest die folgenden Schritte, die Schritte, welche mit ggf. bezeichnet sind, sind lediglich optionale Schritte die zusätzlich zu den anderen Schritten jeweils einzeln oder in Kombination mit anderen optionalen Schritten erfolgen können:
I. Bereitstellen der Hopfendolden
II. ggf. Entfernung von Stängel und ggf. von Blättern
III. Trocknung, vorzugsweise bei weniger als 65°C, zur Verringerung des Feuchtigkeitsgehalts im Hopfen, vorzugsweise auf weniger als 11 Gewichtsprozent bzw. % w/w, vorzugsweise weniger als 8 Gew.%;
IV. Kühlung auf Temperaturen von weniger als minus 25°C;
V. Mahlen zur Herstellung eines Pulvers, z.B. in einer Hammermühle;
VI. ggf. Sieben zur Separation einer Blattfraktion;
VII. ggf. Homogenisierung des Pulvers, vorzugsweise in Pulvermischvorrichtungen;
VIII. Pelletierung in einer Presse, vorzugsweise bei Temperaturen unterhalb von 55°C;
VIII. ggf. Kühlung auf Temperaturen von weniger als 20°C
IX je nach Zeitpunkt des Einsatzes ggf. Verpackung der Pellets unter Sauerstoffausschluss, vorzugsweise unter Inertgasatmosphäre, insbesondere Stickstoff und/oder Kohlendioxid.

Die bevorzugt eingesetzten Hopfenpellets und/oder -granulate haben eine bevorzugte Dichte von mehr als 400 kg/m³, insbesondere eine Dichte von 480 bis 550 kg/m³. Demgegenüber hat der Hopfen in Doldenform, also nicht in granulierter oder pelletierter Form, eine Dichte von 130 bis 150 kg/m³, was u.a. die Dosierung des Hopfens erschwert.

Die bevorzugt eingesetzten Hopfenpellets können bevorzugt zwischen 6 bis 20 Gew.% an sogenannten alpha-Säuren aufweisen.

Die bevorzugt eingesetzten Hopfenpellets können bevorzugt zwischen 6 bis 15 Gew.% an sogenannten beta-Säuren aufweisen.

Die bevorzugt eingesetzten Hopfenpellets können bevorzugt zwischen 0,5 bis 4 ml/ 100g an sogenannten essentiellen Ölen aufweisen.

### Bezugszeichenliste

- 1: Anlage
- 2: Zuleitung
- 3: Behälter
- 4: Zuleitung und/oder Ableitung
- 5: Zuleitung
- 6: Stoffüberleitung
- 7: Trocknungseinheit
- 8: Dosiersystem
- 9: Behälter
- 10: Stoffüberleitung
- 11: Zuleitung
- 12: Pumpe
- 13: Biervorprodukt-führende Leitung
- 14: Durchflussmessung
- 15: Temperatursensor

- 101: Schroten des Malzes
- 102: Maischen
- 103: Läutern
- 104: Kochen
- 105: Kühlen
- 106: Gären
- 107: Reifen/Lagern
- 108: Zugeben von Hopfenpellets
- 109: Klären/Filtern
- 110: Abfüllen

- 200: Hopfenpellets
- 300: Inertgas
- 400: Trockenluft
- 500: Jungbier
- 600: gehopftes Bier

## Patentansprüche

1. Verfahren zur Dosierung von Hopfenpellets (200) in ein vergorenes Biervorprodukt zur Herstellung von Bier mit einer Anlage (1) umfassend ein Dosiersystem (8) und eine Pumpe (12),
wobei das Verfahren **gekennzeichnet ist durch** die folgenden Schritte:
I. Zuführen von Hopfenpellets (200) in die Anlage (1);
II. Dosieren einer vorbestimmten Menge an Hopfenpellets vom Dosiersystem zur Pumpe (12);
III. Zuleiten der vorbestimmten Menge Hopfenpellets (200) aus II. in eine biervorprodukt-führende Leitung (13) oder einen mit Biervorprodukt befüllten Tank durch die Pumpe (12)
wobei das Zuleiten der dosierten Hopfenpellets (200) in die biervorprodukt-führende Leitung (13) oder in den mit dem Biervorprodukt befüllten Tank in pelletierter und/oder granulierter Form erfolgt und
wobei die Temperatur des Biervorproduktes in der biervorprodukt-führenden Leitung (13) oder in dem mit dem Biervorprodukt befüllten Tank weniger als 60°C beträgt.

2. Verfahren nach Anspruch 1, **dadurch gekennzeichnet, dass** ein Klären des mit pelletiertem und/oder granuliertem Hopfen versehenen Bieres durch Mittel der mechanischen Trenntechnik, insbesondere durch eine Filtrationsvorrichtung und/oder eine Zentrifuge erfolgt.

3. Verfahren nach Anspruch 1 oder 2, **dadurch gekennzeichnet, dass** zumindest 30 Gew.%, vorzugsweise zumindest 50 Gew.%, besonders bevorzugt zumindest 80 Gew.% der in die Anlage (1) eingeleiteten pelletierten und/oder granulierten Hopfenpellets (200) beim Zuleiten der dosierten Hopfenpellets (200) in das Biervorprodukt in pelletierter und/oder granulierter Form mit einer mittleren Korngröße von zumindest 1 mm vorliegen, wobei die Hopfenpellets (200) besonders bevorzugt im Vergleich zu natürlichen Hopfendolden mit gleichem Gewicht einen höheren Lupulingehalt aufweisen.

4. Verfahren nach einem der vorhergehenden Ansprüche, **dadurch gekennzeichnet, dass** die Hopfenpellets (200) trocken in die biervorprodukt-führende Leitung (13) oder in den mit dem Biervorprodukt befüllten Tank zugeleitet werden.

5. Verfahren nach einem der vorhergehenden Ansprüche 1-3, **dadurch gekennzeichnet, dass** die Hopfenpellets (200) in einer Flüssigkeit in die biervorprodukt-führende Leitung (13) oder in den mit dem Biervorprodukt befüllten Tank zugeleitet werden.

6. Verfahren nach einem der vorhergehenden Ansprüche, **dadurch gekennzeichnet, dass** die Temperatur des Biervorproduktes in der biervorprodukt-führenden Leitung (13) oder in dem mit dem Biervorprodukt befüllten Tank weniger als 30 °C beträgt.

7. Verfahren nach einem der vorhergehenden Ansprüche, **dadurch gekennzeichnet, dass** das Biervorprodukt ein vergorenes Biervorprodukt oder ein Jungbier (600) in einem Herstellprozess für Bier ist.

8. Verfahren nach einem der vorhergehenden Ansprüche, **dadurch gekennzeichnet, dass** die Anlage einen ersten Behälter (3) aufweist, welcher in Transportrichtung der Hopfenpellets (200) vor dem Dosiersystem (8) angeordnet ist.

9. Verfahren nach einem der vorhergehenden Ansprüche, **dadurch gekennzeichnet, dass** die Anlage (1) einen zweiten Behälter (9) aufweist, welcher zwischen dem Dosiersystem (8) und der Pumpe (12) angeordnet ist.

10. Verfahren nach einem der vorhergehenden Ansprüche, **dadurch gekennzeichnet, dass** während des Verfahrens ein Inertgas (300) in das Dosiersystem (8), in den ersten und/oder in den zweiten Behälter (3, 9) eingeleitet wird, wobei die Hopfenpellets (200) besonders bevorzugt zumindest im Dosiersystem (8) oder im zweiten Behälter (9) mit Inertgas (300) überlagert werden.

11. Verfahren nach einem der vorhergehenden Ansprüche, **dadurch gekennzeichnet, dass** das Verfahren im Anschluss an das Zuleiten der dosierten Hopfenpellets (200) eine Reinigung der Anlage (1) umfasst, wobei die Reinigung mit einem oder mehreren flüssigen oder dampfförmigen Reinigungsfluiden erfolgt, wobei die Reinigung besonders bevorzugt ein Zuleiten von Trockenluft nach erfolgter Reinigung mit flüssigem oder dampfförmigen Reinigungsfluid umfasst.

12. Verfahren nach einem der vorhergehenden Ansprüche, **dadurch gekennzeichnet, dass** das Dosieren der Hopfenpellets (200) durch das Dosiersystem (8) zumindest durch ein Zellrad erfolgt, wobei die Dosierung der Hopfenpellets (200) besonders bevorzugt durch eine Regelung der Zellraddrehzahl des Zellrades insbesondere in Abhängigkeit von einem ermittelten Durchfluss des Biervorproduktes in der biervorproduktführenden Leitung erfolgt oder von einer Rührgeschwindigkeit des Biervorproduktes in dem mit biervorprodukt-befüllten Tank erfolgt.

13. Verfahren nach einem der vorhergehenden Ansprüche, **dadurch gekennzeichnet, dass** die Pumpe (12) für eine Schonförderung ausgelegt ist, wobei ein Rotor und ein Stator der Pumpe (12) derart angeordnet sind, dass die granulierte und/oder pelletierte Form der Hopfenpellets zumindest bei 90 Gew.% aller Hopfenpellets (200) erhalten bleibt.

14. Verfahren nach einem der vorhergehenden Ansprüche, **dadurch gekennzeichnet, dass** der Füllstand des ersten und/oder des zweiten Behälters (3, 9) durch ein Füllstandsmessgerät, durch ein Druckmessgerät und/oder durch ein Füllstandsgrenzschalter überwacht wird.

15. Anlage (1) zum Ausführen eines Verfahrens gemäß Anspruch 1, **dadurch gekennzeichnet, dass** die Anlage (1)
a) einen ersten Behälter (3) zur Aufnahme von Hopfenpellets,
b) ein Dosiersystem (8) zur Dosierung dieser Hopfenpellets in
c) einen zweiten Behälter (9) und
d) eine Pumpe (12) aufweist, welche vom zweiten Behälter (9) gespeist wird und druckseitig an eine flüssigkeitsführende Leitung (13b), insbesondere eine Biervorprodukt-führende Leitung, oder an einen mit Biervorprodukt befüllten Tank angeschlossen ist,
wobei das Dosiersystem (8) ein Zellrad aufweist, welches derart gesteuert wird, dass eine Zudosierung von Hopfenpellets in das Biervorprodukt erst bei einer Temperatur des Biervorproduktes von unter 60°C erfolgt.

## Claims

1. A method for metering hops pellets (200) into a fermented beer precursor in order to produce beer, with a plant (1) comprising a metering system (8) and a pump (12),
wherein the method is **characterized by** the following steps:
I. supplying hops pellets (200) into the plant (1);
II. metering a predefined quantity of hops pellets from the metering system to the pump (12);
III. introducing the specified quantity of hops pellets (200) from II. into a line (13) carrying beer precursor or into a tank filled with beer precursor by means of the pump (12),
wherein the metered hops pellets (200) are introduced in pelletized and/or granulated form into the line (13) carrying beer precursor or into the tank filled with the beer precursor, and
wherein the temperature of the beer precursor in the line (13) carrying beer precursor or in the tank filled with the beer precursor is less than 60°C.

2. The method as claimed in claim 1, **characterized in that** the beer containing the pelletized and/or granulated hops is clarified by means of the mechanical separating technique, in particular by a filtration device and/or a centrifuge.

3. The method as claimed in claim 1 or 2, **characterized in that** when the metered hops pellets (200) are introduced into the beer precursor, at least 30 w.%, preferably at least 50 w.%, particularly preferably at least 80 w.% of the hops pellets (200) introduced into the plant (1) are present in pelletized and/or granulated form with a mean grain size of at least 1 mm, wherein the hops pellets (200) have a higher lupulin content than natural hop cones with the same weight..

4. The method as claimed in any of the preceding claims, **characterized in that** the hops pellets (200) are introduced in dry state into the line (13) carrying beer precursor or into the tank filled with beer precursor.

5. The method as claimed in any of the preceding claims 1 - 3, **characterized in that** the hops pellets (200) are introduced in a liquid into the line (13) carrying beer precursor or into the tank filled with beer precursor.

6. The method as claimed in any of the preceding claims, **characterized in that** the temperature of the beer precursor in the line (13) carrying beer precursor or in the tank filled with the beer precursor is less than 30°C.

7. The method as claimed in any of the preceding claims, **characterized in that** the beer precursor is a fermented beer precursor ore a green beer (600) in a beer production process.

8. The method as claimed in any of the preceding claims, **characterized in that** the plant comprises a first container (3) which is arranged upstream of the metering system (8) in the transport direction of the hops pellets (200).

9. The method as claimed in any of the preceding claims, **characterized in that** the plant (1) comprises a second container (9) which is arranged between the metering system (8) and the pump (12).

10. The method as claimed in any of the preceding claims, **characterized in that** during the method, an inert gas (300) is introduced into the metering system (8), the first and/or the second container (3, 9, wherein the hops pellets (200) particularly preferably are overlaid with inert gas (300) at least in the metering system (8) or in the second container (9).

11. The method as claimed in any of the preceding claims, **characterized in that** the method comprises a cleaning of the plant (1) following the supply of the metered hops pellets (200), wherein the cleaning takes place with one or more liquid or vaporous cleaning fluids, wherein the cleaning particularly preferably comprises the introduction of dry air after cleaning with liquid or vaporous cleaning fluid.

12. The method as claimed in any of the preceding claims, **characterized in that** the hops pellets (200) are metered by the metering system (8) by means of at least one rotary feeder, wherein the dosage of the hops pellets (200) particularly preferably are metered by controlling the rotation speed of the rotary feeder, in particular depending on a mean throughflow of the beer precursor in the line carrying the beer precursor, or depending on the agitation speed of the beer precursor in the tank filled with beer precursor.

13. The method as claimed in any of the preceding claims, **characterized in that** the pump (12) is designed for gentle delivery, wherein a rotor and a stator of the pump (12) are arranged such that the granulated and/or pelletized form of the hops pellets is retained for at least 90 w.% of all hops pellets (200).

14. The method as claimed in any of the preceding claims, **characterized in that** the fill level of the first and/or second container (3, 9) is monitored by fill level meter, a pressure meter and/or a fill level limit switch.

15. A plant (1) for carrying out a method as claimed in claim 1, **characterized in that** the plant (1) comprises
a) a first container (3) for receiving hops pellets,
b) a metering system (8) for metering these hops pellets into
c) a second container (9), and
d) a pump (12) which is fed from the second container (9) and on the pressure side is connected to a liquid-carrying line (13b), in particular a line carrying beer precursor, or to a tank filled with a beer precursor, wherein the metering system (8) comprises a rotary feeder which is controlled such that hops pellets are metered into the beer precursor only when the beer precursor temperature is less than 60°C.

## Revendications

1. Procédé pour le dosage de pellets de houblon (200) dans un précurseur de bière fermenté pour la fabrication de bière avec une installation (1) comprenant un système de dosage (8) et une pompe (12), lequel procédé est **caractérisé en ce qu'**il comprend les étapes suivantes :
I. introduction de pellets de houblon (200) dans l'installation (1) ;
II. dosage d'une quantité prédéterminée de pellets de houblon du système de dosage vers la pompe (12) ;
III. acheminement de la quantité prédéterminée de pellets de houblon (200) de l'étape II dans une conduite acheminant le précurseur de bière (13) ou une cuve remplie avec du précurseur de bière à l'aide de la pompe (12),
es pellets de houblon (200) dosés étant acheminés sous forme de pellets et/ou sous forme de granulés dans la conduite acheminant le précurseur de bière (13) ou dans la cuve remplie avec le précurseur de bière et
la température du précurseur de bière dans la conduite acheminant le précurseur de bière (13) ou dans la cuve remplie avec le précurseur de bière est inférieure à 60 °C.

2. Procédé selon la revendication 1, **caractérisé en ce que** la bière additionnée du houblon en pellets et/ou en granulés est clarifiée par des moyens de séparation mécaniques, en particulier par un dispositif de filtration et/ou une centrifugeuse.

3. Procédé selon la revendication 1 ou 2, **caractérisé en ce qu'**au moins 30 % du poids, de préférence au moins 50 % du poids, en particulier au moins 80 % du poids des pellets de houblon (200) sous forme de pellets et/ou de granulés introduits dans l'installation (1) se présentent, lors de l'introduction des pellets de houblon (200) dosés dans le précurseur de bière, sous forme de pellets et/ou de granulés ayant une grosseur de grains moyenne d'au moins 1 mm, les pellets de houblon (200) présentant de préférence un taux de lupuline plus élevé que les cônes de houblon naturels, à poids égal.

4. Procédé selon l'une des revendications précédentes, **caractérisé en ce que** les pellets de houblon (200) sont introduits à sec dans la conduite acheminant le précurseur de bière (13) ou dans la cuve remplie avec le précurseur de bière.

5. Procédé selon l'une des revendications 1 à 3, **caractérisé en ce que** les pellets de houblon (200) sont introduits dans un liquide dans la conduite acheminant le précurseur de bière (13) ou dans la cuve remplie avec le précurseur de bière.

6. Procédé selon l'une des revendications précédentes, **caractérisé en ce que** la température du précurseur de bière dans la conduite acheminant le précurseur de bière (13) ou dans la cuve remplie avec le précurseur de bière est inférieure à 30 °C.

7. Procédé selon l'une des revendications précédentes, **caractérisé en ce que** le précurseur de bière est un précurseur de bière fermenté ou une bière jeune (600) dans un processus de fabrication de bière.

8. Procédé selon l'une des revendications précédentes, **caractérisé en ce que** l'installation comporte un premier réservoir (3) qui est disposé avant le système de dosage (8) dans le sens de transport des pellets de houblon (200).

9. Procédé selon l'une des revendications précédentes, **caractérisé en ce que** l'installation (1) comprend un deuxième réservoir (9) qui est disposée entre le système de dosage (8) et la pompe (12).

10. Procédé selon l'une des revendications précédentes, **caractérisé en ce qu'**un gaz inerte (300) est introduit pendant le procédé dans le système de dosage (8), dans le premier réservoir et/ou dans le deuxième (3, 9), les pellets de houblon (200) étant de préférence placés sous couverture de gaz inerte (300) au moins dans le système de dosage (8) ou dans le deuxième réservoir (9).

11. Procédé selon l'une des revendications précédentes, **caractérisé en ce qu'**il comprend, après l'introduction des pellets de houblon (200) dosés, un nettoyage de l'installation (1), lequel nettoyage est effectué avec un ou plusieurs fluides de nettoyage sous forme de liquide ou de vapeur, le nettoyage comprenant de préférence l'introduction d'air sec après le nettoyage avec un fluide de nettoyage sous forme de liquide ou de vapeur.

12. Procédé selon l'une des revendications précédentes, **caractérisé en ce que** le dosage des pellets de houblon (200) par le système de dosage (8) est réalisé au moins par une roue cellulaire, le dosage des pellets de houblon (200) étant effectué de préférence par une régulation de la vitesse de rotation de la roue cellulaire, en particulier en fonction d'un débit déterminé du précurseur de bière dans la conduite acheminant le précurseur de bière ou de la vitesse d'agitation du précurseur de bière dans la cuve remplie avec le précurseur de bière.

13. Procédé selon l'une des revendications précédentes, **caractérisé en ce que** la pompe (12) est conçue pour un transport en douceur, un rotor et un stator de la pompe (12) étant disposés de façon à préserver la forme de granulés et/ou de pellets des pellets de houblon pour au moins 90 % du poids total des pellets de houblon (200).

14. Procédé selon l'une des revendications précédentes, **caractérisé en ce que** le niveau de remplissage du premier réservoir et/ou du deuxième (3, 9) est surveillé par un appareil de mesure du niveau de remplissage, par un appareil de mesure de la pression et/ou par un détecteur de niveau à contact de fin de course.

15. Installation (1) pour la mise en oeuvre d'un procédé selon la revendication 1, **caractérisée en ce que** l'installation (1) comporte
a) un premier réservoir (3) destiné à recevoir des pellets de houblon,
b) un système de dosage (8) pour le dosage de ces pellets de houblon dans
c) un deuxième réservoir (9) et
d) une pompe (12) qui est alimentée par le deuxième réservoir (9) et qui est raccordée du côté du refoulement à une conduite acheminant du liquide (13b), en particulier une conduite acheminant du précurseur de bière, ou à une cuve remplie avec du précurseur de bière,
le système de dosage (8) comportant une roue cellulaire commandée de telle façon que l'ajout de pellets de houblon au précurseur de bière ne se fait qu'à une température du précurseur de bière inférieure à 60 °C.
